# EUROPÄISCHE PATENTSCHRIFT

(11) **EP 0 755 428 B1**
(45) Veröffentlichungstag und Bekanntmachung des Hinweises auf die Patenterteilung: **09.12.1998**
(21) Anmeldenummer: 95915181.2
(22) Anmeldetag: 03.04.1995
(51) Int. Cl.: C11D 1/44, C11D 3/20

(54) **VERWENDUNG VON FETTAMIN-ETHOXYLATEN IN WÄSSRIGEN REINIGERN FÜR HARTE OBERFLÄCHEN**
USE OF ALIPHATIC AMINE ETHOXYLATES IN AQUEOUS CLEANING AGENTS FOR HARD SURFACES
UTILISATION D'ETHOXYLATES D'AMINES GRASSES DANS DES NETTOYANTS AQUEUX POUR SURFACES DURES

(30) Priorität: 11.04.1994 DE 4412380
(43) Veröffentlichungstag der Anmeldung: 29.01.1997
(73) Patentinhaber: Henkel Kommanditgesellschaft auf Aktien, 40191 Düsseldorf (DE)
(72) Erfinder: MOLZ, Thomas, D-40724 Hilden (DE); HECHT, Gaby, D-41334 Nettetal (DE); GEKE, Jürgen, D-40225 Düsseldorf (DE)
(86) Internationale Anmeldenummer: EP9501223
(87) Internationale Veröffentlichungsnummer: WO9527768

(56) Entgegenhaltungen:
- EP-A- 0 172 534
- DE-A- 3 343 096
- DATABASE WPI Section Ch, Week 9209 Derwent Publications Ltd., London, GB; Class A97, AN 92-069561 & JP-A-04 013 799 (YUSHIRO KAGAKU KOGY) , 17.Januar 1992

## Beschreibung

Die Erfindung betrifft wäßrige Lösungen zur Reinigung und zur abrasiven mechanischen Behandlung von harten Oberflächen, beispielsweise Glas- oder Keramikoberflächen und insbesondere Metall-, Lack- und Kunststoffoberflächen sowie Konzentrate zum Bereiten dieser Lösungen durch Verdünnen mit Wasser. Zum Bereiten der Lösungen bzw. der Konzentrate werden Anlagerungsprodukte von 3 bis 8 Mol Ethylenoxid an Fettamine in Kombination mit Carbonsäuren mit 6 bis 10 C-Atomen verwendet.

Die Reinigung von Lack- und Kunststoffoberflächen, beispielsweise die Reinigung lackierter Straßen- und Schienenfahrzeuge, stellt wegen der im allgemeinen hydrophoben Oberfläche von Lacken und Kunststoffen besondere Anforderungen an das Benetzungsvermögen von wäßrigen Reinigungslösungen. Wäßrige Reiniger, die für die Reinigung von metallischen oder keramischen Oberflächen entwickelt wurden, zeigen daher häufig Leistungsnachteile bei der Reinigung von Kunststoffoberflächen. Für die Reinigung von Lack- und Kunststoffoberflächen müssen daher spezielle Wirkstoff-Kombinationen ausgewählt werden.

Die Verwendung ethoxylierter Fettamine als Lösungsvermittler für Reinigerkonzentrate ist aus der DE-A-36 03 579 bekannt. Die dort beschriebene Erfindung betrifft die Verwendung eines oder mehrerer ethoxylierter Fettamine der allgemeinen Formel (I) 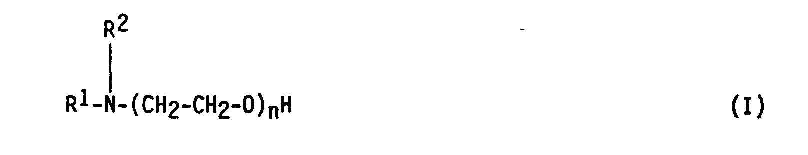 in der
n für eine ganze Zahl von 2 bis 30,
R¹ für einen geradkettigen oder verzweigten, gesättigten oder ungesättigten Alkylrest mit 8 bis 24 C-Atomen und R² für eine Gruppe

   -(CH₂-CH₂-O)ₘ-H

   oder eine Gruppe 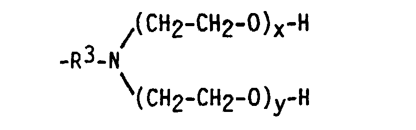 steht wobei,
R³ einen Alkylenrest mit 2 bis 6 C-Atomen, m, x und y jeweils eine ganze Zahl von 0 bis 30 bedeuten, als Lösungsvermittler in Reinigerkonzentraten für Reinigungsmittellösungen.

Der Ethoxylierungsgrad der Fettamine kann demnach den weiten Bereich von 2 bis 90 mol Ethylenoxid pro mol Fettamin umfassen. Vorzugsweise soll er im Bereich von 10 bis 15 liegen. Dieses Dokument lehrt nicht die Verwendung von Anlagerungsprodukten von maximal 8 Mol Ethylenoxid an Fettamine in Verbindung mit Carbonsäuren zur Reinigung von harten Oberflächen.

Die deutsche Patentanmeldung DE-A-42 30 158 lehrt die Verwendung einer speziellen Tensid-Kombination aus alkoxylierten Alkylaminen und Polyethylenglykol-Sorbitanestern in wäßriger Lösung zur Reinigung und antistatischen Behandlung von Kunststoff-Oberflächen aus Polyolefinen. Das Gewichtsverhältnis der alkoxylierten Alkylamine und der Polyethylenglykol-Sorbitanester liegt im Bereich von 3:1 bis 1:3. Bei den alkoxylierten Alkylaminen handelt es sich vorzugsweise um ethoxylierte Fettamine mit 2 bis 20 Ethylenoxideinheiten, insbesondere 5 bis 15 Ethylenoxideinheiten. In den Anwendungsbeispielen werden Anlagerungsprodukte von 12 Mol Ethylenoxid an 1 Mol Kokosamin eingesetzt. Dieses Dokument lehrt ebenfalls nicht die Kombination von Anlagerungsprodukten von maximal 8 Mol Ethylenoxid an Fettamine mit Carbonsäuren mit 6 bis 10 C-Atomen.

DE-A-40 01 595 offenbart demulgierende, pulverförmige oder flüssige Reinigungsmittel, enthaltend eine Kombination der folgenden Bestandteile:
a) mindestens ein Alkyl-ethoxylat,
b) mindestens eine Monocarbonsäure oder deren wasserlösliche Salze,
c) mindestens ein anionisches Tensid, ausgewählt aus der Gruppe der
   c1) Alkylsulfate
   c2) Alkyl-polyglykolether-sulfate
   c3) Alkylarylsulfonate,
   wobei der Gehalt der Reinigungsmittel an den vorstehenden Komponenten a, b und c insgesamt 1,5 bis 15 Gew.-% beträgt und das Gewichtsverhältnis von a zu b im Bereich von 3:1 bis 1:6 und das Gewichtsverhältnis von (a + b):c im Bereich von 3:1 bis 1:3 liegt,
d) 0 bis 98,5 Gew.-% mindestens eines organischen oder anorganischen Builderstoffes.
e) bis 100 Gew.-% an pulverförmigen oder flüssigen Hilfsstoffen oder Stellmitteln.

Im Sinne dieses Dokuments bedeutet demulgierend, daß sich die von den gereinigten Oberflächen entfernten ölhaltigen Verschmutzungen bei Verdünnung der wäßrigen Reinigungslösung von selbst abscheiden. Daher lassen sich die von den Substratoberflächen abgewaschene Fette und Öle leicht und problemlos aus wäßrigen Medien entfernen, beispielsweise über einfache Ölabscheider, wonach die Wasserphase zur Einleitung in den Vorfluter geeignet ist.

Die DE-A-33 43 096 betrifft eine Metallbearbeitungs- oder Metallverarbeitungs-Flüssigkeit auf Wasserbasis, die Polyoxyethylenalkylamine der Formel 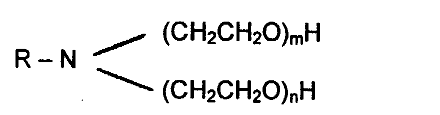 (R = Alkylgruppe, 3 < m + n < 24) enthält. Zusätzlich können derartige Formulierungen Zinkdithiophosphate, Polyoxyethylen-phosphorigsäureester oder Polyoxyethylen-phosphorsäureester enthalten. Die genannten Verbindungen dienen hierbei als Konservierungsmittel. Derartige Formulierungen sind beispielsweise verwendbar als Schneidöle, Walzöle und Wärmebehandlungsöle.

In der JP-A-4013799 (Derwent Publications, Class A97, AN 92-069561) werden industrielle Reinigungsmittel beschrieben, die Polyoxyethylenalkylamine mit HLB-Werten von 4 bis 7 sowie von 8 bis 16, ein Sequestriermittel und Wasser in bestimmten Mengenverhältnissen enthalten.

Die Erfindung stellt sich die Aufgabe, wäßrige Lösungen zur Reinigung und zur abrasiven mechanischen Behandlung sowie Konzentrate zur Bereitung dieser Lösungen zur Verfügung zu stellen, die ein gutes Benetzungsvermögen für Lackund Kunststoffoberflächen haben; je nach Produktformulierung können sie demulgierende Eigenschaften aufweisen. Um breite Einsetzbarkeit zu gewährleisten, sollen die Reinigungslösungen auch für andere harte Oberflächen wie Metall-, Glas- oder Keramikoberflächen geeignet sein und beispielsweise auch als Gleitschleifmittel verwendet werden können.

Die Aufgabe wird gelöst durch die Verwendung von Anlagerungsprodukten von 3 bis 8 Mol Ethylenoxid an Fettamine mit 10 bis 18 Kohlenstoffatomen in Konzentrationen von 0,005 bis 3 Gew.-% in wäßrigen Lösungen zum Reinigen oder zur abrasiven mechanischen Behandlung von harten Oberflächen, wobei diese Lösungen zusätzlich 0,0005 bis 5 Gew.-% lineare oder verzweigte einbasische Carbonsäuren ohne alkoholische OH-Gruppen mit 6 bis 10 C-Atomen oder deren Anionen enthalten.

Insbesondere sind solche Ethoxylierungsprodukte von Fettaminen geeignet, die 4 bis 6 Mol Ethylenoxid pro Mol Fettamin enthalten. Wie üblich bedeutet die Angabe der Molzahl Ethylenoxid pro Mol Fettamin das durchschnittliche Molverhältnis. Die Ethoxylierungsprodukte liegen als Produktgemisch mit einer gewissen Streuung der Anzahl der Ethylenoxideinheiten an den einzelnen Fettamin-Startmolekülen vor. Sie weisen also eine bestimmte Homologenverteilung hinsichtlich der Anzahl der Ethylenoxid-Einheiten pro Fettamin-Startmolekül auf, die durch das angewandte Ethoxylierungsverfahren beeinflußt werden kann. Bei der homogenen basischen Katalyse beispielsweise unter Verwendung von KOH oder Na-Methanolat als Katalysatoren erhält man eine breite Homologenverteilung. Durch geeignete Wahl des Katalysators, wie beispielsweise in der DE-A-38 43 713 angegeben, kann eine eingeengte Homologenverteilung erhalten werden. Im Sinne dieser Erfindung sind sowohl Produkte mit breiter als auch solche mit eingeengter Homologenverteilung geeignet.

Die hier als Fettamine bezeichneten Alkylamine können natürlichen oder synthetischen Ursprungs sein. Als Fettamine setzt man zur Ethoxylierung vorzugsweise solche ein, die 10 bis 14 C-Atome enthalten. Aus ökonomischen Gründen sind solche Fettamine vorteilhaft, die aus natürlich vorkommenden Fetten und Ölen gewonnen werden und die aus Gemischen von Molekülen unterschiedlicher C-Kettenlänge bestehen. Ein bevorzugtes Beispiel hierfür ist Kokosamin, das ein Maximum der C-Kettenverteilung bei C_{12/14} aufweist. Synthetisch hergestellte Fettamine, die gegebenenfalls nur eine C-Kettenlänge aufweisen können, sind ebenfalls verwendbar.

Als bevorzugte Carbonsäuren setzt man lineare oder verzweigte gesättigte Carbonsäuren mit 7 bis 10 C-Atomen ein, vorzugsweise Caprylsäure, Pelargonsäure, 2,2-Dimethyloctansäure und insbesondere 2-Ethylhexansäure sowie 3,5,5-Trimethylhexansäure.

Die Carbonsäuren können als solche oder als bei den erfindungsgemäßen Konzentrationen wasserlösliche Salze eingesetzt werden. Da die anwendungsfertigen Reinigungslösungen alkalische pH-Werte aufweisen, werden in diesen Lösungen die Carbonsäuren zumindest teilweise als Anionen vorliegen. Es ist vorteilhaft, die Carbonsäuren als Natrium- und/oder Kaliumsalze und/oder zusammen mit Alkanolamin bzw. als Alkanolammoniumsalze einzusetzen. Wegen der toxikologischen Nachteile von Diethanolamin verwendet man vorzugsweise die Carbonsäuren in Form ihrer Monoethanolammonium- oder Triethanolammoniumsalze.

Gemäß einer bevorzugten Ausführungsform können die erfindungsgemäß zu verwendenden Lösungen zusätzlich 0,005 bis 6 Gew.-% chelatisierende anorganische und/oder organische Komplexbildner enthalten.

Als chelatisierende anorganische Komplexbildner kommen oligomere oder polymere Phosphate, Pyrophosphate, Triphosphate (= "Tripolyphosphate") und zyklische oder lineare Metaphosphate in Betracht, die vorzugsweise als Alkalimetallsalze und insbesondere als Natrium- oder Kaliumsalze eingesetzt werden. Sie können einzeln oder in Kombination miteinander verwendet werden.

Organische chelatisierende Komplexbildner sind vorzugsweise ausgewählt aus der Gruppe der polymeren Carbonsäuren, Hydroxyoligocarbonsäuren, stickstoffhaltige Mono- oder Oligocarbonsäuren wie beispielsweise Nitrilotriessigsäure und Ethylendiamintetraessigsäure, Diphosphonsäuren, Aminophosphonsäuren, Phosphonooligocarbonsäuren, oder jeweils deren Anionen. Nitrilotriessigsäure (NTA) bzw. deren Anionen sind besonders bevorzugt.

Die Leistungsfähigkeit der durch die erfindungsgemäße Verwendung von Fettamin-Ethoxylaten erhältlichen wäßrigen Reinigungslösungen kann durch weitere, im Stand der Technik bekannte Additive gesteigert werden. Je nach Einsatzzweck können die wäßrigen Reinigungslösungen zusätzlich enthalten:
0,0005 bis 3 Gew.-% weitere Tenside aus der Gruppe der nichtionischen, anionischen, kationischen oder amphoteren Tenside,
0,005 bis 3 Gew.-% Buildersubstanzen ausgewählt aus der Gruppe der Alkalimetallhydroxide, -silicate, -phosphate, -carbonate, -borate, -carboxylate oder Alkanolamine,
0,0005 bis 3 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atomen,
0,02 bis 3 Gew.-% eines Hydrotrops, vorzugsweise ausgewählt aus der Gruppe der Phosphorsäureester und der aromatischen Sulfonate, insbesondere der Cumolsulfonate.
0,005 - 5 Gew.-% eines oder mehrerer Korrosionsinhibitoren, die sich von den weiter oben genannten Carbonsäuren mit 6 bis 10 C-Atomen, die ebenfalls korrosionsinhibierend wirken, unterscheiden. Als solche zusätzliche Korrosionsinhibitoren kommen beispielsweise die Salze von Carbonsäuren der Formel (II) in Betracht,

R³-COOH (II)

in der R³ einen substituierten oder unsubstituierten Phenylrest oder einen aliphatischen, linearen oder verzweigten Kohlenwasserstoffrest mit 10 bis 23 Kohlenstoffatomen und 0 bzw. 1 bis 5 Doppelbindungen oder eine R⁴-Ph-CH=CH- oder R⁴-Ph-COCH=CH-Gruppe bedeutet, wobei R⁴ für Wasserstoff oder einen linearen oder verzweigten Alkylrest mit bis zu 18 Kohlenstoffatomen und Ph für eine Phenylgruppe steht.

Vorzugsweise werden als zusätzliche Korrosionsinhibitoren Carbonsäuren der Formel (II) eingesetzt, in der R³ für Alkylreste mit 10 bis 17 Kohlenstoffatomen steht.

Beispiele für aromatische Carbonsäuren sind Benzoesäure, substituierte Benzoesäuren und Zimtsäure. Weitere Beispiele sind in der Gruppe der Alkylbenzoylacrylsäuren enthalten.

Die genannten freien Säuren werden als Alkali-, Erdalkali-, Ammonium-, Alkylammonium- und/oder Zinksalze eingesetzt.

Als weitere Gruppe von Korrosionsinhibitoren kommen anionische Tenside vom Typ der Petrolsulfonate in Betracht. Hierbei handelt es sich um Sulfoxidationsprodukte von Paraffinfraktionen mit durchschnittlich 6 bis 30, insbesondere 10 bis 20 Kohlenstoffatomen. Die Petrolsulfonate können auch als sekundäre Alkansulfonate aufgefaßt werden, wobei als Gegenionen Alkalioder Erdalkalimetalle, Ammonium oder Alkylammonium in Betracht kommen. Vorzugsweise werden die Petrolsulfonate in Form ihrer Natrium- oder Calciumsalze eingesetzt.

Als weitere Gruppe von Korrosionsinhibitoren kommen Sulfonierungsprodukte ungesättigter Fettsäureglyceridester der Formel (III), sogenannte "Sulfotriglyceride" oder "Sulfoils" in Betracht, 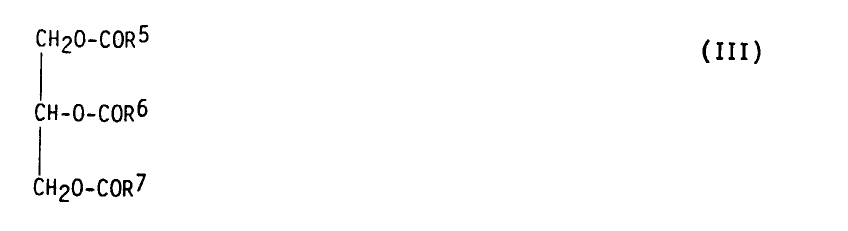 in der R⁵CO für einen ungesättigten Acylrest mit 16 bis 24 Kohlenstoffatomen und 1 bis 5 Doppelbindungen und R⁶CO und R⁷CO unabhängig voneinander für Acylreste mit 6 bis 24 Kohlenstoffatomen und 0 oder 1 bis 5 Doppelbindungen steht.

Sulfotriglyceride stellen bekannte Stoffe dar, die beispielsweise durch Anlagerung von Schwefeltrioxid oder Chlorsulfonsäure an ungesättigte Triglyceride, insbesondere Rapsöl oder Sonnenblumenöl erhalten werden können. In diesem Zusammenhang sei auf die Offenlegungsschriften DE-A1 39 36 001 und DE-A1 41 18 955 verwiesen, in denen die Herstellung und die korrosionsinhibierenden Eigenschaften der Sulfotriglyceride beschrieben sind. Im Sinne der erfindungsgemäßen Mittel wird vorzugsweise sulfoniertes Rapsöl in Form des Natrium-, Calcium-, Ammonium- oder Alkylammoniumsalzes eingesetzt.

Als Korrosionsinhibitoren kommen desweiteren auch - einzeln oder in Kombination - Alkanolamine und ihre Salze, insbesondere Carbonsäuresalze, Sulfonate, organische Borverbindungen, insbesondere Borsäureester, Fettsäureamide, Aminodicarbonsäuren, Dimerfettsäuren, Phosphorsäureester, Thiophensäureester, Dialkyldithiophosphate, Mono- und Dialkylarysulfonate, Benzotriazole und Polyisobutenbensteinsäurederivate in Betracht.

Die unter der erfindungsgemäßen Verwendung von Fettamin-Ethoxylaten erhältlichen wäßrigen Reinigerlösungen eignen sich als neutrale bis hochalkalische Reiniger mit pH-Werten von 6 bis 14 zur Reinigung beispielsweise von Aluminium oder von gegebenenfalls beschichtetem Stahl in Form von Bändern oder Blechen, Fahrzeugen, Maschinen, Kleinteilen und Betriebseinrichtungen und sind insbesondere für solche Gegenstände geeignet, die lackierte Oberflächen oder Oberflächen aus Kunststoffen aufweisen. Vorzugsweise weisen die Reinigerlösungen pH-Werte von 7 bis 12, insbesondere von 8 bis 11 auf. Die Reinigerlösungen, die vorteilhafterweise eine Temperatur im Bereich von 10 bis 90 °C aufweisen, können dabei durch manuellen oder mechanischen Auftrag wie beispielsweise Wischen oder Bürsten, durch Tauchen oder durch Spritzen - zum Beispiel auch in drehenden Behältern und/oder mit Ultraschallunterstützung - mit den harten Oberflächen, insbesondere den Lack- oder Kunststoffoberflächen in Berührung gebracht werden.

Die Lösungen sind weiterhin als Hilfsmittel bei der abrasiven Behandlung von Metallen wie beispielsweise dem Gleitschleifen verwendbar. Hierzu werden vorzugsweise solche eingesetzt, die chelatisierende organische Komplexbildner enthalten. Durch Mitverwendung der vorstehend genannten Carbonsäuren mit 6 bis 10 C-Atomen und/oder von Alkanolaminen, insbesondere Mono- und/oder Triethanolamin läßt sich eine verbesserte Korrosionsschutzwirkung erzielen.

Das Gleitschleifen von Metallteilen, beispielsweise solchen aus legiertem oder unlegiertem Stahl, aus Kupfer, Messing oder Bronze, ist ein bekannter Prozeß. Er kann beispielsweise durch mechanische Bewegung einer Schüttung des Behandlungsgutes in Gegenwart des Gleitschleifmittels in drehenden, taumelnden oder vibrierenden Behältern erfolgen.

Üblicherweise mischt man wäßrige Reinigerlösungen nicht vor Ort aus den einzelnen Bestandteilen zusammen, sondern man stellt sie aus flüssig-wäßrigen oder pulverförmigen Konzentraten, die die einzelnen Bestandteile in entsprechenden Mengenverhältnissen enthalten, durch Verdünnen mit Wasser her. Üblicherweise stellt man die Konzentrate so ein, daß die Verdünnungsfaktoren auf die Anwendungskonzentration je nach Anwendungszweck zwischen etwa 5 und etwa 200 liegen.

Demgemäß umfaßt die Erfindung auch die Verwendung von Anlagerungsprodukten von 3 bis 8 Mol Ethylenoxid an Fettamine mit 10 bis 18 C-Atomen in wäßrigen Konzentraten zum Bereiten von wäßrigen Lösungen für die Reinigung oder die abrasive Behandlung von harten Oberflächen, insbesondere von Metall-, Lack- oder Kunststoffoberflächen, dadurch gekennzeichnet, daß die wäßrigen Konzentrate
a) mehr als 30 Gew.-% Wasser,
b) 0,1 bis 15 Gew.-% eines Anlagerungsproduktes von 3 bis 8, vorzugsweise von 4 bis 6 Mol Ethylenoxid an Fettamine mit 10 bis 18, vorzugsweise 12 bis 14 C-Atome,
c) 1 bis 50 Gew.-% lineare oder verzweigte einbasische Carbonsäuren ohne alkoholische OH-Gruppen mit 6 bis 10, vorzugsweise mit 7 bis 10 C-Atomen, oder deren Anionen, insbesondere in Form ihrer Natrium-, Kalium- und/oder Alkanolammoniumsalze, vorzugsweise ihrer Monoethanolammonium- oder Triethanolammoniumsalze,
sowie vorzugsweise mindestens eine der folgenden Komponenten enthalten, wobei sich die Summe der Bestandteile der Konzentrate zu 100 % addiert:
d) 0,01 bis 15 Gew.-% weitere Tenside aus der Gruppe der nichtionischen, anionischen, kationischen oder amphoteren Tenside,
e) 0,1 bis 20 Gew.-% Buildersubstanzen ausgewählt aus der Gruppe der Alkalimetallhydroxide, -silicate, -phosphate, -carbonate, -borate, -carboxylate oder Alkanolamine,
f) 0,01 bis 15 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atomen,
g) 0,5 bis 15 Gew.-% eines Hydrotrops, vorzugsweise ausgewählt aus der Gruppe der Phosphorsäureester und der aromatischen Sulfonate, insbesondere der Cumolsulfonate,
h) 0,1 bis 20 Gew.-% eines oder meherer Korrosionsinhibitoren, vorzugsweise ausgewählt aus der Gruppe der vorstehend beschriebenen aromatischen oder der aliphatischen Carbonsäuren mit mehr als 10 C-Atomen, Petrolsulfonaten, Sulfonierungsprodukte ungesättigter Fettsäureglyceridester, Alkanolamine und ihre Salze, insbesondere Carbonsäuresalze, Sulfonate, organische Borverbindungen, insbesondere Borsäureester, Fettsäureamide, Aminodicarbonsäuren, Dimerfettsäuren, Phosphorsäureester, Thiophensäureester, Dialkyldithiophosphate, Mono- und Dialkylarysulfonate, Benzotriazole und Polyisobutenbensteinsäurederivate,
i) 0,01 bis 30 Gew.-% chelatisierende anorganische und/oder organische Komplexbildner.

Weiterhin umfaßt die Erfindung die Verwendung von Anlagerungsprodukten von 3 bis 8 Mol Ethylenoxid an Fettamine mit 10 bis 18 Kohlenstoffatomen in pulverförmigen Produkten zum Bereiten von wäßrigen Lösungen für die Reinigung oder die abrasive Behandlung von harten Oberflächen, insbesondere von Metall-, Lack-, oder Kunststoffoberflächen, dadurch gekennzeichnet, daß die Pulver
a) 0,1 bis 10 Gew.-% eines Anlagerungsproduktes von 3 bis 8, vorzugsweise von 4 bis 6 Mol Ethylenoxid an Fettamine mit 10 bis 18, vorzugsweise 12 bis 14 C-Atome,
b) 0,1 bis 20 Gew.-% lineare oder verzweigte einbasische Carbonsäuren ohne alkoholische OH-Gruppen mit 6 bis 10, vorzugsweise mit 7 bis 10 C-Atomen, oder deren Anionen, insbesondere in Form ihrer Natrium-, Kalium- und/oder Alkanolammoniumsalze, vorzugsweise ihrer Monoethanolammonium- oder Triethanolammoniumsalze,
sowie vorzugsweise mindestens eine der folgenden Komponenten enthalten, wobei sich die Summe der Bestandteile zu 100 % addiert:
c) 0,01 bis 10 Gew.-% weitere Tenside aus der Gruppe der nichtionischen, anionischen, kationischen oder amphoteren Tenside,
d) 0,1 bis 98 Gew.-% Buildersubstanzen ausgewählt aus der Gruppe der Alkalimetallhydroxide, -silicate, -phosphate, -carbonate, -borate, -carboxylate oder Alkanolamine,
e) 0,01 bis 10 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atome,
f) 0,5 bis 10 Gew.-% eines Hydrotrops, vorzugsweise ausgewählt aus der Gruppe der aromatischen Sulfonate, insbesondere der Cumolsulfonate,
g) 0,01 bis 99 Gew.-% chelatisierende organische und/oder anorganische Komplexbildner.

### Beispiele 1 und 2, Vergleichsbeispiel 1

Es wurden Reinigerkonzentrate folgender Zusammensetzung hergestellt (Gew.-%):

| | |
|---|---|
| 76,0 % | Wasser |
| 6,0 % | Pentanatriumtripolyphosphat |
| 1,5 % | 3,5,5-Trimethylhexansäure |
| 4,0 % | Natriumcarbonat |
| 3,0 % | Na-Cumolsulfonat |
| 3,0 % | Triethanolamin |
| 4,5 % | Octanol x 10 EO |
| 2,0 % | Kokosamin x n EO (Vergleich 1: n = 12; Beispiel 1: n = 5, konventionelle Homologenverteilung Beispiel 2: n = 5, eingeengte Homolgenverteilung) |

Anwendungskonzentration: 5 %

### Beispiele 3-5, Vergleichsbeispiel 2

Es wurden flüssige Reinigerkonzentrate folgender Zusammensetzung hergestellt (Gew.-%):

| | | |
|---|---|---|
| Vergleich 2 | 5 % | Kokosamin x 5 EO |
| | 95 % | vollentsalztes Wasser |

| | | |
|---|---|---|
| Beispiel 3 | 5 % | Kokosamin x 5 EO |
| | 1,5 % | Ethylhexansäure |
| | 93,5 % | vollentsalztes Wasser |

| | | |
|---|---|---|
| Beispiel 4 | 5 % | Kokosamin x 5 EO |
| | 5 % | Ethylhexansäure |
| | 90 % | vollentsalztes Wasser |

| | | |
|---|---|---|
| Beispiel 5 | 5 % | Kokosamin x 5 EO |
| | 5 % | Pentanatriumtripolyphosphat |
| | 1,5 % | Ethylhexansäure |
| | 88,5 % | vollentsalztes Wasser |

Anwendungskonzentration: 10 % in Stadtwasser

### Beispiel 6, Vergleichsbeispiel 3

Es wurden flüssige Reinigerkonzentrate hergestellt, indem folgende Komponenten in der angegebenen Reihenfolge miteinander vermischt wurden:

| | |
|---|---|
| 53,5 Gew.-% | vollentsalztes Wasser |
| 8,0 Gew.-% | Monoethanolamin |
| 4,0 Gew.-% | Borsäure |
| 8,0 Gew.-% | 3,5,5-Trimethylhexansäure |
| 22,0 Gew.-% | 50 %-ige wäßrige Lösung von Kaliumtripolyphosphat |
| 1,0 Gew.-% | Kokosamin x n EO (Beispiel 9: n = 5 Vergl. 5: n = 12) |
| 3,0 Gew.-% | C₁₂₋₁₈-Fettalkohol x 9,1.EO-Butylether |
| 0,5 Gew.-% | 35 %-ige wäßrige Lösung von Dimethyldodecylbenzylamnoniumchlorid |

Anwendungskonzentration: 2 Gew.-%

### Durchführung der Reinigungsversuche:

Werkstücke aus PVC und aus Stahl werden in Öl getaucht und eine bestimmte Zeit abhängen gelassen. Danach stellt man die beölten Stücke in Bechergläser mit den Reinigerlösungen der oben genannten Anwendungskonzentration bei Raumtemperatur und beobachtet die Ablösung des Ölfilms von den Teilen. Hierbei werden drei Zeitpunkte berücksichtigt:
1) Der Ölfilm beginnt aufzureißen, d.h. es bilden sich Löcher in der Be-ölung. (Zeitpunkt hier mit "Beginn" benannt)
2) Der Ölfilm hat sich punktförmig zusammengezogen, es sind keine großflächigen Beölungen mehr vorhanden. (Zeitpunkt hier mit "Fläche" benannt)
3) Der Ölfilm hat sich vollständig vom Werkstück abgelöst. (Zeitpunkt hier mit "Ende" benannt)

| Ergebnisse: | | | | |
|---|---|---|---|---|
| **Reiniger** | **Substrat** | **Beginn (Sek.)** | **Fläche (Sek.)** | **Ende (Sek.)** |
| Vergleich 1 | PVC | 40 | 660 | 5520 |
| mit Kokosamin x 12 EO | Stahl | 55 | 3200 | 9900 |
| Beisp.1 | | | | |
| mit Kokosamin x 5 EO | PVC | 17 | 240 | 960 |
| (konventionelle Homologenverteilung) | Stahl | 35 | 480 | 2040 |
| Beisp.2 | | | | |
| mit Kokosamin x 5 EO | PVC | 15 | 210 | 920 |
| (eingeengte Homologenverteilung) | Stahl | 30 | 450 | 1980 |
| Vergleich 2 | PVC | 20 | 125 | 840 |
| Beisp. 3 | PVC | 17 | 85 | 705 |
| Beisp. 4 | PVC | 15 | 70 | 785 |
| Beisp. 5 | PVC | 17 | 170 | 560 |
| Beisp. 6 | PVC | 50 | 1380 | 4200 |
| Vergl. 3 | PVC | 180 | 3620 | > 9000 |
| | | | | |
| Beisp. 6 | Stahl | 15 | 340 | 900 |
| Vergl. 3 | Stahl | 25 | 1260 | 2100 |

## Patentansprüche

1. Verwendung von Anlagerungsprodukten von 3 bis 8 Mol Ethylenoxid an Fettamine mit 10 bis 18 Kohlenstoffatomen in Konzentrationen von 0,005 bis 3 Gew.-% in wäßrigen Lösungen zum Reinigen oder zur abrasiven mechanischen Behandlung von harten Oberflächen, wobei diese Lösungen zusätzlich 0,0005 bis 5 Gew.-% lineare oder verzweigte einbasische Carbonsäuren ohne alkoholische OH-Gruppen mit 6 bis 10 C-Atomen oder deren Anionen enthalten.

2. Verwendung nach Anspruch 1, dadurch gekennzeichnet, daß die Anlagerungsprodukte 4 bis 6 Mol Ethylenoxid enthalten.

3. Verwendung nach einem oder beiden der Ansprüche 1 und 2, dadurch gekennzeichnet, daß die Anlagerungsprodukte eine eingeengte Homologenverteilung der Ethylenoxid-Einheiten äufweisen.

4. Verwendung nach einem oder mehreren der Ansprüche 1 bis 3, dadurch gekennzeichnet, daß es sich um Anlagerungsprodukte an Fettamine mit 10 bis 14 C-Atome handelt.

5. Verwendung nach einem oder mehreren der Ansprüche 1 bis 4, dadurch gekennzeichnet, daß die Carbonsäuren gesättigt sind, vorzugsweise 7 bis 10 C-Atome aufweisen und insbesondere Caprylsäure, Pelargonsäure, 2,2-Dimethyloctansäure, 2-Ethylhexansäure und/oder 3,5,5-Trimethylhexansäure darstellen.

6. Verwendung nach Anspruch 5, dadurch gekennzeichnet, daß die Carbonsäuren in Form ihrer Natrium-, Kalium- und/oder Alkanolammniumsalze, vorzugsweise ihrer Monoethanolammonium- oder Triethanolammoniumsalze vorliegen.

7. Verwendung nach einem oder mehreren der Ansprüche 1 bis 6, dadurch gekennzeichnet, daß die Lösung zusätzlich 0,005 bis 6 Gew.-% chelatisierende anorganische Komplexbildner enthält.

8. Verwendung nach einem oder mehreren der Ansprüche 1 bis 6, dadurch gekennzeichnet, daß die Lösung zusätzlich 0,005 bis 6 Gew.-% chelatisierende organische Komplexbildner enthält.

9. Verwendung nach einem oder mehreren der Ansprüche 1 bis 8, dadurch gekennzeichnet, daß die wäßrige Lösung zusätzlich 0,0005 bis 3 Gew.-% weitere Tenside aus der Gruppe der nichtionischen, anionischen, kationischen oder amphoteren Tenside enthält.

10. Verwendung nach einem oder mehreren der Ansprüche 1 bis 9, dadurch gekennzeichnet, daß die wäßrige Lösung zusätzlich 0,005 bis 3 Gew.-% Buildersubstanzen ausgewählt aus der Gruppe der Alkalimetallhydroxide, -silicate, -phosphate, -carbonate, -borate, -carboxylate oder Alkanolamine enthält.

11. Verwendung nach einem oder mehreren der Ansprüche 1 bis 10, dadurch gekennzeichnet, daß die wäßrige Lösung zusätzlich 0,0005 bis 3 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atomen enthält.

12. Verwendung nach einem oder mehreren der Ansprüche 1 bis 11, dadurch gekennzeichnet, daß die wäßrige Lösung zusätzlich 0,02 bis 3 Gew.-% eines Hydrotrops, vorzugsweise ausgewählt aus der Gruppe der Phosphorsäureester und der aromatischen Sulfonate, insbesondere der Cumolsulfonate, enthält.

13. Verwendung nach einem oder mehreren der Ansprüche 1 bis 12, dadurch gekennzeichnet, daß die wäßrige Lösung zusätzlich 0,005 bis 5 Gew.-% eines oder mehrerer Korrosionsinhibitoren enthält.

14. Verwendung nach einem oder mehreren der Ansprüche 1 bis 13, dadurch gekennzeichnet, daß die wäßrige Lösung einen pH-Wert von 6 bis 14, vorzugsweise von 7 bis 12 und insbesondere von 8 bis 11 aufweist.

15. Verwendung nach einem oder mehreren der Ansprüche 1 bis 14, dadurch gekennzeichnet, daß die wäßrige Lösung eine Temperatur im Bereich von 10 bis 90 °C aufweist und durch manuellen oder mechanischen Auftrag, durch Tauchen oder durch Spritzen mit den Oberflächen in Berührung gebracht wird.

16. Verwendung nach einem oder mehreren der Ansprüche 1 bis 15, dadurch gekennzeichnet, daß es sich bei den harten Oberflächen um Metalloberflächen und insbesondere um Lack- oder Kunststoffoberflächen handelt.

17. Verwendung nach einem oder mehreren der Ansprüche 1 bis 14, dadurch gekennzeichnet, daß die wäßrige Lösung zum Gleitschleifen von Metallteilen, insbesondere solchen aus legiertem oder unlegiertem Stahl, Kupfer, Messing oder Bronze eingesetzt wird.

18. Verwendung nach Anspruch 17, dadurch gekennzeichnet, daß das Gleitschleifen durch mechanische Bewegung einer Schüttung der Metallteile in Gegenwart der wäßrigen Lösung in bewegten, vorzugsweise in drehenden, taumelnden oder vibrierenden Behältern erfolgt.

19. Verwendung von Anlagerungsprodukten von 3 bis 8 Mol Ethylenoxid an Fettamine mit 10 bis 18 C-Atomen in wäßrigen Konzentraten zum Bereiten von wäßrigen Lösungen für die Reinigung oder die abrasive Behandlung von harten Oberflächen, insbesondere von Metall-, Lack- oder Kunststoffoberflächen, dadurch gekennzeichnet, daß die wäßrigen Konzentrate
a) mehr als 30 Gew.-% Wasser,
b) 0,1 bis 15 Gew.-% eines Anlagerungsproduktes von 3 bis 8, vorzugsweise von 4 bis 6 Mol Ethylenoxid an Fettamine mit 10 bis 18, vorzugsweise 12 bis 14 C-Atome,
c) 1 bis 50 Gew.-% lineare oder verzweigte einbasische Carbonsäuren ohne alkoholische OH-Gruppen mit 6 bis 10, vorzugsweise mit 7 bis 10 C-Atomen, oder deren Anionen, insbesondere in Form ihrer Natrium-, Kalium- und/oder Alkanolammoniumsalze, vorzugsweise ihrer Monoethanolammonium- oder Triethanolammoniumsalze,
sowie vorzugsweise mindestens eine der folgenden Komponenten enthalten, wobei sich die Summe der Bestandteile der Konzentrate zu 100 % addiert:
d) 0,01 bis 15 Gew.-% weitere Tenside aus der Gruppe der nichtionischen, anionischen, kationischen oder amphoteren Tenside,
e) 0,1 bis 20 Gew.-% Buildersubstanzen ausgewählt aus der Gruppe der Alkalimetallhydroxide, -silicate, -phosphate, -carbonate, -borate, -carboxylate oder Alkanolamine,
f) 0,01 bis 15 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atomen,
g) 0,5 bis 15 Gew.-% eines Hydrotrops, vorzugsweise ausgewählt aus der Gruppe der Phosphorsäureester und der aromatischen Sulfonate, insbesondere der Cumolsulfonate,
h) 0,1 bis 20 Gew.-% eines oder mehrerer Korrosionsinhibitoren,
i) 0,01 bis 30 Gew.-% chelatisierende anorganische und/ oder organische Komplexbildner.

20. Verwendung von Anlagerungsprodukten von 3 bis 8 Mol Ethylenoxid an Fettamine mit 10 bis 18 Kohlenstoffatomen in pulverförmigen Produkten zum Bereiten von wäßrigen Lösungen für die Reinigung oder die abrasive Behandlung von harten Oberflächen, insbesondere von Metall-, Lack-, oder Kunststoffoberflächen, dadurch gekennzeichnet, daß die Pulver
a) 0,1 bis 10 Gew.-% eines Anlagerungsproduktes von 3 bis 8, vorzugsweise von 4 bis 6 Mol Ethylenoxid an Fettamine mit 10 bis 18, vorzugsweise 12 bis 14 C-Atome,
b) 0,1 bis 20 Gew.-% lineare oder verzweigte einbasische Carbonsäuren ohne alkoholische OH-Gruppen mit 6 bis 10, vorzugsweise mit 7 bis 10 C-Atomen, oder deren Anionen, insbesondere in Form ihrer Natrium-, Kalium- und/oder Alkanolammoniumsalze, vorzugsweise ihrer Monoethanolammonium- oder Triethanolammoniumsalze,
sowie vorzugsweise mindestens eine der folgenden Komponenten enthalten, wobei sich die Summe der Bestandteile zu 100 % addiert:
c) 0,01 bis 10 Gew.-% weitere Tenside aus der Gruppe der nichtionischen, anionischen, kationischen oder amphoteren Tenside,
d) 0,1 bis 98 Gew.-% Buildersubstanzen ausgewählt aus der Gruppe der Alkalimetallhydroxide, -silicate, -phosphate, -carbonate, -borate, -carboxylate oder Alkanolamine,
e) 0,01 bis 10 Gew.-% eines Entschäumers, vorzugsweise eines Fettalkohol-Ethoxylats/Propoxylats oder eines mit einer Alkylgruppe mit 4 bis 8 C-Atomen endgruppenverschlossenen Anlagerungsproduktes von 7 bis 12 Mol Ethylenoxid an Fettalkohole mit 8 bis 18 C-Atome,
f) 0,5 bis 10 Gew.-% eines Hydrotrops, vorzugsweise ausgewählt aus der Gruppe der aromatischen Sulfonate, insbesondere der Cumolsulfonate,
g) 0,01 bis 99 Gew.-% chelatisierende organische und/oder anorganische Komplexbildner.

## Claims

1. The use of adducts of 3 to 8 moles of ethylene oxide with C₁₀₋₁₈ fatty amines in concentrations of 0.005 to 3% by weight in aqueous solutions for cleaning hard surfaces or for the abrasive mechanical treatment of such surfaces, these solutions additionally containing 0.0005 to 5% by weight of linear or branched C₆₋₁₀ monobasic carboxylic acids with no alcoholic OH groups or anions thereof.

2. The use claimed in claim 1, characterized in that the adducts contain 4 to 6 moles of ethylene oxide.

3. The use claimed in one or both of claims 1 and 2, characterized in that the adducts have a narrow homolog distribution of the ethylene oxide units.

4. The use claimed in one or more of claims 1 to 3, characterized in that adducts with C₁₀₋₁₄ fatty amines are used.

5. The use claimed in one or more of claims 1 to 4, characterized in that the carboxylic acids are saturated, preferably contain 7 to 10 carbon atoms and, more particularly, are caprylic acid, pelargonic acid, 2,2-dimethyloctanoic acid, 2-ethylhexanoic acid and/or 3,5,5-trimethylhexanoic acid.

6. The use claimed in claim 5, characterized in that the carboxylic acids are present in the form of their sodium, potassium and/or alkanolammonium salts, preferably their monoethanolammonium or triethanolammonium salts.

7. The use claimed in one or more of claims 1 to 6, characterized in that the solution additionally contains 0.005 to 6% by weight of chelating inorganic complexing agents.

8. The use claimed in one or more of claims 1 to 6, characterized in that the solution additionally contains 0.005 to 6% by weight of chelating organic complexing agent.

9. The use claimed in one or more of claims 1 to 8, characterized in that the aqueous solution additionally contains 0.0005 to 3% by weight of other surfactants from the group of nonionic, anionic, cationic or amphoteric surfactants.

10. The use claimed in one or more of claims 1 to 9, characterized in that the aqueous solution additionally contains 0.005 to 3% by weight of builders selected from the group of alkali metal hydroxides, silicates, phosphates, carbonates, borates, carboxylates or alkanolamines.

11. The use claimed in one or more of claims 1 to 10, characterized in that the aqueous solution additionally contains 0.0005 to 3% by weight of a defoamer, preferably a fatty alcohol ethoxylate/propoxylate or an adduct of 7 to 12 moles ethylene oxide with C₈₋₁₈ fatty alcohols end-capped by a C₄₋₈ alkyl group.

12. The use claimed in one or more of claims 1 to 11, characterized in that the aqueous solution additionally contains 0.02 to 3% by weight of a hydrotrope preferably selected from the group of phosphoric acid esters and aromatic sulfonates, more particularly cumenesulfonates.

13. The use claimed in one or more of claims 1 to 12, characterized in that the aqueous solution additionally contains 0.005 to 5% by weight of one or more corrosion inhibitors.

14. The use claimed in one or more of claims 1 to 13, characterized in that the aqueous solution has a pH value of 6 to 14, preferably 7 to 12 and more preferably 8 to 11.

15. The use claimed in one or more of claims 1 to 14, characterized in that the aqueous solution has a temperature of 10 to 90°C and is applied to the surfaces manually or by machine, by immersion or by spraying.

16. The use claimed in one or more of claims 1 to 15, characterized in that the hard surfaces are metal surfaces and, more particularly, painted or plastic surfaces.

17. The use claimed in one or more of claims 1 to 14, characterized in that the aqueous solution is used for the smoothing of metal parts, more particularly parts of alloyed or non-alloyed steel, copper, brass or bronze.

18. The use claimed in claim 17, characterized in that the smothing treatment is carried out by mechanical agitation of a pile of the metal parts in the presence of the aqueous solution in moving, preferably rotating, tumbling or vibrating containers.

19. The use of adducts of 3 to 8 moles of ethylene oxide with C₁₀₋₁₈ fatty amines in aqueous concentrates for preparing aqueous solutions for cleaning hard surfaces or for the abrasive treatment of such surfaces, more particularly metal, painted or plastic surfaces, characterized in that the aqueous concentrates contain
a) more than 30% by weight of water,
b) 0.1 to 15% by weight of an adduct of 3 to 8 and preferably 4 to 6 moles ethylene oxide with C₁₀₋₁₈ and preferably C₁₂₋₁₄ fatty amines,
c) 1 to 50% by weight of linear or branched C₆₋₁₀ and preferably C₇₋₁₀ monobasic carboxylic acids with no alcoholic OH groups or anions thereof, more particularly in the form of their sodium, potassium and/or alkanolammonium salts, preferably their monoethanolammonium or triethanolammonium salts
and preferably at least one of the following components, the sum of the constituents of the concentrates being 100%:
d) 0.01 to 15% by weight of other surfactants from the group of nonionic, anionic, cationic or amphoteric surfactants,
e) 0.1 to 20% by weight of builders selected from selected from the group of alkali metal hydroxides, silicates, phosphates, carbonates, borates, carboxylates or alkanolamines,
f) 0.01 to 15% by weight of a defoamer, preferably a fatty alcohol ethoxylate/propoxylate or an adduct of 7 to 12 moles ethylene oxide with C₈₋₁₈ fatty alcohols end-capped by a C₄₋₈ alkyl group,
g) 0.5 to 15% by weight of a hydrotrope preferably selected from the group of phosphoric acid esters and aromatic sulfonates, more particularly cumenesulfonates,
h) 0.1 to 20% by weight of one or more corrosion inhibitors,
i) 0.01 to 30% by weight of chelating inorganic and/or organic complexing agents.

20. The use of adducts of 3 to 8 moles of ethylene oxide with C₁₀₋₁₈ fatty amines in powder-form products for preparing aqueous solutions for cleaning hard surfaces or for the abrasive treatment of such surfaces, more particularly metal, painted or plastic surfaces, characterized in that the powders contain
a) 0.1 to 10% by weight of an adduct of 3 to 8 and preferably 4 to 6 moles ethylene oxide with C₁₀₋₁₈ and preferably C₁₂₋₁₄ fatty amines,
b) 0.1 to 20% by weight of linear or branched C₆₋₁₀ and preferably C₇₋₁₀ monobasic carboxylic acids with no alcoholic OH groups or anions thereof, more particularly in the form of their sodium, potassium and/or alkanolammonium salts, preferably their monoethanolammonium or triethanolammonium salts
and preferably at least one of the following components, the sum of the constituents being 100%:
c) 0.01 to 10% by weight of other surfactants from the group of nonionic, anionic, cationic or amphoteric surfactants,
d) 0.1 to 98% by weight of builders selected from the group of alkali metal hydroxides, silicates, phosphates, carbonates, borates, carboxylates or alkanolamines,
e) 0.01 to 10% by weight of a defoamer, preferably a fatty alcohol ethoxylate/propoxylate or an adduct of 7 to 12 moles ethylene oxide with C₈₋₁₈ fatty alcohols end-capped by a C₄₋₈ alkyl group,
f) 0.5 to 10% by weight of a hydrotrope preferably selected from the group of aromatic sulfonates, more particularly cumenesulfonates,
g) 0.01 to 99% by weight of chelating inorganic and/or organic complexing agents.

## Revendications

1. Utilisation de produits d'addition de 3 à 8 moles d'oxyde d'éthylène à des amines grasses comportant 10 à 18 atomes de carbone, en concentrations de 0,005 à 3 % en poids dans des solutions aqueuses pour le nettoyage ou le traitement mécanique abrasif des surfaces dures, ces solutions renfermant en plus 0,0005 à 5 % en poids d'acides carboxyliques monobasiques sans groupes OH alcooliques, linéaires ou ramifiés, comportant 6 à 10 atomes de carbone ou les anions de ceux-ci.

2. Utilisation selon la revendication 1, caractérisée en ce que les produits d'addition renferment 4 à 6 moles d'oxyde d'éthylène.

3. Utilisation selon une des revendications 1 et 2 ou les deux, caractérisée en ce que les produits d'addition présentent une répartition ou distribution resserrée des homologues des unités d'oxyde d'éthylène.

4. Utilisation selon une ou plusieurs des revendications 1 à 3, caractérisée en ce qu'il s'agit de produits d'addition à des amines grasses comportant 10 à 14 atomes de C.

5. Utilisation selon une ou plusieurs des revendications 1 à 4, caractérisée en ce que les acides carboxyliques sont saturés, comportent de préférence 7 à 10 atomes de C et sont de préférence l'acide caprylique, l'acide pélargonique, l'acide 2,2-diméthyloctanoïque, l'acide 2-éthylhexanoïque et/ou l'acide 3,5,5-triméthylhexanoïque.

6. Utilisation selon la revendication 5, caractérisée en ce que les acides carboxyliques sont présents sous la forme de leurs sels de sodium, de potassium et/ou d'alcanolammonium, de préférence de mono- ou de triéthanolammonium.

7. Utilisation selon une ou plusieurs des revendications 1 à 6, caractérisée en ce que la solution renferme en plus 0,005 à 6 % en poids d'agents complexants chélateurs inorganiques.

8. Utilisation selon une ou plusieurs des revendications 1 à 6, caractérisée en ce que la solution renferme en plus 0,005 à 6 % en poids d'agents complexants chélateurs organiques.

9. Utilisation selon une ou plusieurs des revendications 1 à 8, caractérisée en ce que la solution aqueuse renferme en plus 0,0005 à 3 % en poids d'autres tensioactifs appartenant au groupe des surfactifs non ioniques, anioniques, cationiques ou amphotères.

10. Utilisation selon une ou plusieurs des revendications 1 à 9, caractérisée en ce que la solution aqueuse renferme en plus 0,005 à 3 % en poids de substances adjuvantes, sélectionnées parmi le groupe des hydroxydes, des silicates, des phosphates, des carbonates, des borates et des carboxylates de métaux alcalins, ou des alcanolamines.

11. Utilisation selon une ou plusieurs des revendications 1 à 10, caractérisée en ce que la solution aqueuse renferme en plus 0,0005 à 3 % en poids d'un agent antimousse, de préférence un éthoxylate/propoxylate d'alcool gras ou d'un produit d'addition de 7 à 12 moles d'oxyde d'éthylène à des alcools gras comportant 8 à 18 atomes de C, fermé au niveau du groupe terminal par un groupe alkyle présentant 4 à 8 atomes de C.

12. Utilisation selon une ou plusieurs des revendications 1 à 11, caractérisée en ce que la solution aqueuse renferme en plus 0,02 à 3 % en poids d'un hydrotrope, sélectionné de préférence parmi le groupe des esters d'acide phosphorique et des sulfonates aromatiques, en particulier des cumènesulfonates.

13. Utilisation selon une ou plusieurs des revendications 1 à 12, caractérisée en ce que la solution aqueuse renferme en plus 0,005 à 5 % en poids d'un ou de plusieurs inhibiteurs de corrosion.

14. Utilisation selon une ou plusieurs des revendications 1 à 13, caractérisée en ce que la solution aqueuse présente un pH de 6 à 14, de préférence de 7 à 12 et en particulier, de 8 à 11.

15. Utilisation selon une ou plusieurs des revendications 1 à 14, caractérisée en ce que la solution aqueuse présente une température dans l'intervalle de 10 à 90 °C et est mise en contact avec les surfaces par application manuelle ou mécanique, par immersion ou aspersion.

16. Utilisation selon une ou plusieurs des revendications 1 à 15, caractérisée en ce que les surfaces dures sont des surfaces métalliques et en particulier, laquées, vernies ou peintes, ou en matière synthétique.

17. Utilisation selon une ou plusieurs des revendications 1 à 14, caractérisée en ce que la solution aqueuse est mise en oeuvre pour la vibro-abrasion des pièces métalliques, en particulier en acier allié ou non allié, en cuivre, en laiton ou en bronze.

18. Utilisation selon la revendication 17, caractérisée en ce que la vibro-abrasion a lieu par agitation mécanique d'un déversement des pièces métalliques, en présence de la solution aqueuse dans des récipients agités, de préférence en rotation, en nutation ou en vibration.

19. Utilisation de produits d'addition de 3 à 8 moles d'oxyde d'éthylène à des amines grasses comportant 10 à 18 atomes de carbone dans des concentrés aqueux, pour la préparation de solutions aqueuses destinées au nettoyage ou au traitement abrasif des surfaces dures, en particulier des surfaces métalliques, des surfaces laquées, vernies ou peintes ou des surfaces en matière synthétique, caractérisée en ce que les concentrés aqueux renferment
a) plus de 30 % en poids d'eau,
b) 0,10 à 15 % en poids d'un produit d'addition de 3 à 8, de préférence de 4 à 6 moles d'oxyde d'éthylène à des amines grasses comportant 10 à 18, de préférence 12 à 14 atomes de C,
c) 1 à 50 % en poids d'acides carboxyliques monobasiques sans groupes OH alcooliques, linéaires ou ramifiés, comportant 6 à 10, de préférence 7 à 10 atomes de C, ou des anions de ceux-ci, en particulier sous la forme de leurs sels de sodium, de potassium et/ou d'alcanolammonium, de préférence de leurs sels de mono- ou de triéthanolammonium,
ainsi que de préférence, au moins un des composants suivants, la somme des constituants des concentrés étant égale à 100 %:
d) 0,01 à 15 % en poids d'autres tensioactifs appartenant au groupe des surfactifs non ioniques, anioniques, cationiques ou amphotères,
e) 0,1 à 20 % en poids de substances adjuvantes sélectionnées parmi le groupe des hydroxydes, des silicates, des phosphates, des carbonates, des borates et des carboxylates de métaux alcalins, ou des alcanolamines.
f) 0,01 à 15 % en poids d'un agent antimousse, de préférence d'un éthoxylate/propoxylate d'alcool gras ou d'un produit d'addition de 7 à 12 moles d'oxyde d'éthylène à des alcools gras comportant 8 à 18 atomes de C, fermé au niveau du groupe terminal par un groupe alkyle présentant 4 à 8 atomes de C.
g) 0,5 à 15 % en poids d'un hydrotrope, sélectionné de préférence parmi le groupe des esters d'acide phosphorique et des sulfonates aromatiques, en particulier des cumènesulfonates.
h) 0,1 à 20 % en poids d'un ou de plusieurs inhibiteurs de corrosion,
i) 0,01 à 30 % en poids d'agents complexants chélateurs inorganiques et/ou organiques.

20. Utilisation de produits d'addition de 3 à 8 moles d'oxyde d'éthylène à des amines grasses comportant 10 à 18 atomes de carbone dans des produits pulvérulents pour la préparation de solutions aqueuses destinées au nettoyage ou au traitement abrasif des surfaces dures, en particulier des surfaces métalliques, des surfaces laquées, vernies ou peintes ou des surfaces en matière synthétique, caractérisée en ce que les poudres renferment
a) 0,1 à 10 % en poids d'un produit d'addition de 3 à 8, de préférence de 4 à 6 moles d'oxyde d'éthylène à des amines grasses comportant 10 à 18, de préférence 12 à 14 atomes de C,
b) 0,1 à 20 % en poids d'acides carboxyliques monobasiques sans groupes OH alcooliques, linéaires ou ramifiés, comportant 6 à 10, de préférence 7 à 10 atomes de C, ou les anions de ceux-ci, en particulier sous la forme de leurs sels de sodium, de potassium et/ou d'alcanolammonium, de préférence de leurs sels de mono- ou de triéthanolammonium,
ainsi que de préférence, au moins un des composants suivants, la somme des constituants étant égale à 100 %:
c) 0,01 à 10 % en poids d'autres tensioactifs appartenant au groupe des surfactifs non ioniques, anioniques, cationiques ou amphotères,
d) 0,1 à 98 % en poids de substances adjuvantes sélectionnées parmi le groupe des hydroxydes, des silicates, des phosphates, des carbonates, des borates et des carboxylates de métaux alcalins, ou des alcanolamines.
e) 0,01 à 10 % en poids d'un agent antimousse, de préférence d'un éthoxylate/propoxylate d'alcool gras ou d'un produit d'addition de 7 à 12 moles d'oxyde d'éthylène à des alcools gras comportant 8 à 18 atomes de C, fermé au niveau du groupe terminal par un groupe alkyle présentant 4 à 8 atomes de C.
f) 0,5 à 10 % en poids d'un hydrotrope, sélectionné de préférence parmi le groupe des sulfonates aromatiques, en particulier des cumènesulfonates.
g) 0,01 à 99 % en poids d'agents complexants chélateurs organiques et/ou inorganiques.
